# EUROPÄISCHE PATENTANMELDUNG

(11) **EP 4 717 077 A1**
(43) Veröffentlichungstag der Anmeldung: **01.04.2026**
(21) Anmeldenummer: 24203461.9
(22) Anmeldetag: 30.09.2024
(51) Int. Cl.: A01J 25/12

(54) **VERFAHREN ZUM AUSRÄUMEN VON KÄSELAIBEN AUS EINER KÄSEFORM UND AUSRÄUMSTATION**

(71) Anmelder: Kalt Maschinenbau AG, 9604 Lütisburg (CH)
(72) Erfinder: Grüninger, Siegfried, 9011 St. Gallen (CH)
(74) Vertreter: Wenzel Nemetzade Warthmüller Patentanwälte Part mbB

(57) **Zusammenfassung**

Die Erfindung betrifft ein Verfahren zum Ausräumen von Käselaiben aus Käseformen. Damit sollen entmolkte Käselaibe exakter aus der Käseform entleert und besser für eine weitere Bearbeitung positioniert werden können. Hierzu wird bei einer vertikalen Ausräumbewegung entlang der Achse einer Käseform (3) ein Boden (8) der Käseform entriegelt und der Käselaib (20) wird nachfolgend mit einem Teller (18) eines Ausstossers (16) aus der Käseform (3) gedrückt und auf einer verfahrbaren Ablage abgelegt, wobei gleichzeitig der Boden unter dem Käselaib weggezogen wird.

## Beschreibung

Die Erfindung betrifft ein Verfahren zum Ausräumen von Käselaiben aus einer Käseform und eine Ausräumstation zur Ausräumung beziehungsweise Entleerung von Käseformen, wobei die Käseformen in einer Kassette angeordnet sein können, die wiederum in einer Käsepresse anordenbar ist. Eine solche Käsepresse ist insbesondere eine Kassettenpresse zum Abpressen von Käserohmasse.

Eine Vorrichtung zur industriellen Herstellung von Käselaiben ist zum Beispiel aus der EP-A-350777 bekannt. Diese umfasst eine Einschwemmpresse mit einer rechteckigen und oben offenen Wanne zur Aufnahme von Käseformen, ein Säulengestell zur Anordnung eines heb- und senkbaren Presskopfes und eines Verteilkopfes zur Zuführung und Dosierung der Käserohmasse in die Käseformen und einen, auf der Wanne verfahrbaren Portalwagen zur Führung des Verteilkopfes und zur Handhabung eines Wendemechanismus' für die Käseformen. Der Verteilkopf muss manuell bereitgestellt resp. gewechselt werden. Der Verteilkopf beinhaltet ein Zuführrohr vom Käsefertiger und ein waagerechtes Verteilrohr mit einer Anzahl an Dosierapparaten zur Dosierung der Käserohmasse in die Käseformen. Zusätzlich kann die dosierte Käserohmasse mit einem Balken oder Rakel in die Käseformen befördert werden.

Die Käserohmasse gelangt über ein Zuführrohr, dessen Enden am Kessel eines Käsefertigers beziehungsweise am Verteilkopf angeschlossen sind, in den Verteilkopf und von da in die runden oder eckigen Formen, die in der Wanne der Kassettenpresse angeordnet sind.

Die EP-A-406899 zeigt eine Weiterbildung einer solchen Vorrichtung, bei der die Formen in Kassetten aufgenommen sind, die wiederum kompakt und reihenartig in der Wanne angeordnet sind.

Eine Weiterentwicklung der Zuführung mit einer Gelenkrohranordnung ist in der CH 715264 A2, die eine höhere Dosiergenauigkeit ermöglichen soll, offenbart.

Die eigentliche Käseform kann dabei von einem topfförmigen Mantel mit einem Luftzufuhrkanal umgeben sein (EP 1269832 B1). Dadurch wird ein Luftkanal gebildet und durch die zugeführte Luft kann die an den Sieblöchern des Lochblechs der Form anhaftende Käsemasse nach dem Pressen von der Jerbseite gelöst werden.

Nach der EP-B-543185 ist ein Form- beziehungsweise Pressdeckel über eine Kippeinrichtung mit dem Pressstempel verbindbar (selbstzentrierend), so dass infolge möglicher Kippbewegungen ein Ansaugen des Formdeckels an der Käsemasse vermieden wird. Die Form selbst ist rund oder viereckig und kann aus einem äußeren Behälter und einem inneren, gelochten Mantel bestehen.

Die BR 9300409 offenbart eine Käseform mit doppelter Wandung, die mit, an ihrem Boden kreuzenden, Rippen versehen ist.

In der US 3838955A ist eine Form zur Herstellung von Cheddar offenbart, die eine Käseform und einen Pressdeckel aufweist. Die Form und insbesondere der Pressdeckel sind massiv ausgeführt. Der Pressdeckel sowie der Boden der Form sind mit wenigen Löchern 5 zum Abfluss von Molke versehen.

Eine weitere Käseform mit einer perforierten Formwand aus Metall ist in der DE-B-1030612 offenbart. Diese Formwand weist an ihrer inneren Oberfläche gleichmäßig verteilte, niedrige Erhöhungen und Vertiefungen bis ca.1 mm auf, die die Käserinde bei Entnahme des Käselaibs nicht beschädigen sollen, selbst wenn der Käse aus der Form geschlagen wird.

Eine solche Käseform mit perforierter Wandung kann nach DE-C-2823182 auch aus Kunststoff bestehen, an deren Innenseite zueinander parallele Riefen mit dreieckigem Querschnitt vorgesehen sind.

Bekannt ist weiterhin eine Käseform gemäß EP 2710889 A1, insbesondere zur Anordnung in einer Kassettenpresse, wobei ein Boden der Käseform bis in den Übergangsbereich der äußeren Mantelwand hinein mit einer Rippenstruktur versehen ist. Diese Käseform kann aus Metall oder Kunststoff, insbesondere jedoch aus einem rostfreien Stahl bestehen.

Den beschriebenen Käseformen ist gemeinsam, dass der in ihr abgepresste Rohkäsemasse zum Ankleben an Mantelwand und Boden neigt.

Bekannt sind auch Kassetten für Käseformen, die mit Ausblasdüsen einer Ausblaseinrichtung koppelbar sind, wie in der CH 704208 A2 offenbart. Hierbei setzt die Ausblaseinrichtung mit den Ausblasdüsen auf der Unterseite der Kassette auf und mittels Luft und Schwerkraft werden die Käselaibe aus den Käseformen entformt und auf einer Fördereinrichtung oder einem Ablagetisch zur weiteren Verarbeitung abgesetzt.

Danach fährt die Ausblaseinrichtung wieder nach oben in ihre Ruheposition, die Kassette wird in die Ausgangsstellung gedreht, von einer Handhabungseinrichtung aufgenommen und verfahren.

Der untere Bereich der Kassette ist von einer Pfanne mit Löchern im Boden umhüllt. Zwischen der Pfanne und dem perforierten Mantel der Käseform besteht ein Hohlraum, der allerdings schlecht reinigbar ist. Durch die Löcher wird die Luft zum Entformen der Käselaibe eingeblasen, im Hohlraum entsteht ein Überdruck, welcher durch die Perforation auf den Käselaib wirkt und diesen schlussendlich von der Käseform ablöst.

Der Erfindung liegt nun die Aufgabe zugrunde, ein Verfahren zum Ausräumen von Käselaiben aus Käseformen zu entwickeln, bei dem Käselaibe exakter aus der Käseform entleert werden können und besser für eine weitere Bearbeitung positioniert werden können.

Die Aufgabe ist mit den Merkmalen des Patentanspruchs 1 gelöst.

Erfindungsgemäß erfolgt nach einem Abpressen von Molke eine, bevorzugt vertikalen, Ausräumbewegung entlang der Achse einer Käseform, wobei bei Beginn des Ausräumens ein Boden der Käseform von dieser gelöst und der Käselaib nachfolgend mit einem Teller eines Ausstossers bevorzugt sanft aus der Käseform gedrückt und auf einer verfahrbaren Ablage abgelegt wird, und wobei gleichzeitig der Boden unter dem abgelegten Käselaib weggezogen wird.

In bevorzugter Ausgestaltung wird der Käselaib nach dem wegziehen des Bodens von der Käseform wegbewegt und der Boden wird käseschonend einseitig gesenkt, was einen Reißverschlusseffekt bewirkt.

Mehrere Käseformen können dabei vorteilhaft in einer Kassette angeordnet sein, die wiederum in einer Käsepresse anordenbar ist.

Eine weitere Aufgabe besteht darin, eine Ausräumstation zur Ausräumung beziehungsweise Entleerung von Käseformen bereitzustellen.

Diese Aufgabe ist mit den Merkmalen des Patentanspruchs 4 gelöst.

Erfindungsgemäß umfasst die Ausräumstation einen Gestellrahmen mit einem zweiteiligen Wagen, der einen vorderen Wagen und einen hinteren Wagen aufweist, wobei die Wagen gegeneinander horizontal verschiebbar angeordnet sind, so dass der Wagen zwecks Aufnahme eines Bodenrahmens mit vorteilhaft mehreren Käseformen eine Offenstellung und eine geschlossene Stellung einnehmen kann. Zudem ist oberhalb des zweiteiligen Wagens mindestens ein bewegbarer Ausstosser in einer Aufnahmevorrichtung angeordnet. Der Ausstosser ist koaxial in Achsrichtung der Käseform auf und ab bewegbar. Weist die Kassette mehrere Käseformen auf, so ist jeder Käseform ein Ausstosser zugeordnet.

Bevorzugte Ausführungsformen sind in den abhängigen Ansprüchen offenbart.

Vorteilhaft ist unterhalb des Wagens ein Ablage- und Transportmittel für Käselaibe, bevorzugt ein Transportband angeordnet.

Der Ausstosser ist pneumatisch betreibbar und weist einen, in einem Lager der Aufnahmevorrichtung geführten Rundstab auf, an dessen, dem Wagen zugewandten Ende, ein Teller befindlich ist. Der Querschnitt des Tellers ist geringfügig kleiner als der Innenquerschnitt der Käseform.

Ein Boden der Käseform ist vom Mantelblech mittels Entriegelung lösbar und ist bevorzugt einseitig absenkbar, so dass beim Wegschieben des, in einem Bodenrahmen befindlichen Bodens ein Reißverschlusseffekt bewirkt wird.

Vorteilhaft sind in der Aufnahmevorrichtung mehrere Ausstosser angeordnet, denen entsprechend je eine Käseform mit je einem Boden zuordenbar ist.

Der Wagen weist eine Verriegelungseinrichtung für den Bodenrahmen auf.

Mittels der erfindungsgemäßen Ausräumstation können Käselaibe exakter, im Vergleich zum Rütteln oder Ausblasen, aus einer Käseform entfernt und für eine nachfolgende Bearbeitung positioniert/abgelegt werden, zum Beispiel auf einem Förderband.

Ein Drehen der Käselaibe um die eigene Achse oder ein Aufliegen auf ihrer Mantelfläche wird dabei verhindert.

Die Erfindung wird nachfolgend in einem Ausführungsbeispiel anhand einer Zeichnung näher beschrieben. In der Zeichnung zeigen die
Fig. 1: eine erfindungsgemäße Ausräumstation;
Fig. 2: die Ausräumstation nach Fig. 1 in Zuordnung zu einer Kassettenpresse;
Fig. 3: eine Kassette mit Käseformen;
Fig. 4: ein Bodenrahmen der Kassette nach Fig. 3;
Fig. 5: ein Bodenrahmen nach Fig. 4, ausgefahren;
Fig. 6: ein Bodenrahmen nach Fig. 4, eingehängt;
Fig. 7: Käselaibe ausgestossen;

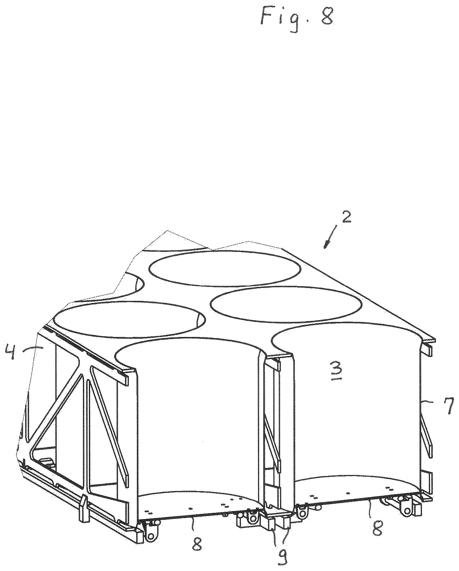

Fig. 8: Kassette nach Fig. 3 in Schnittdarstellung und
Fig. 9: den Bodenrahmen ausgehängt.

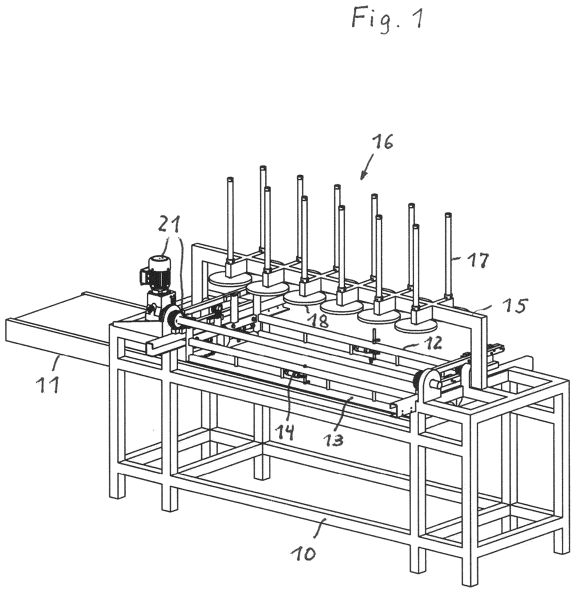

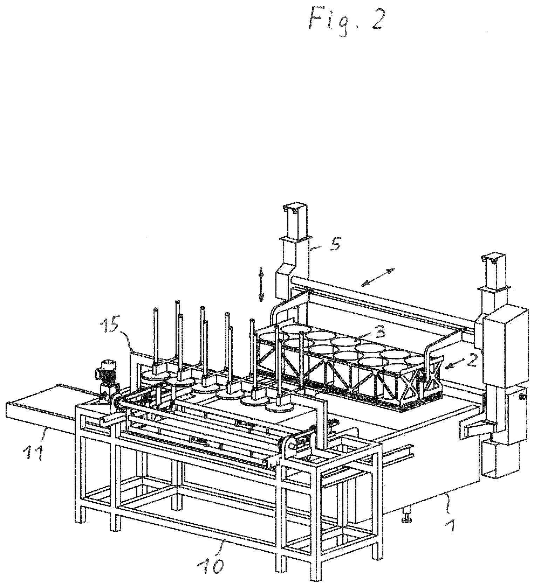

Eine erfindungsgemäße Ausräumstation ist in der Fig. 1 dargestellt und in der Fig. 2 in ihrer Zuordnung zu einer Kassettenpresse zum Abpressen von Käserohmasse. Hierbei kann zum Beispiel eine Kassettenpresse gemäß EP 2710888 A1 der Anmelderin verwendet werden, wobei in bekannter Weise auch mehrere Kassetten 2 in der Presswanne 1 einer solchen Kassettenpresse angeordnet sein können.

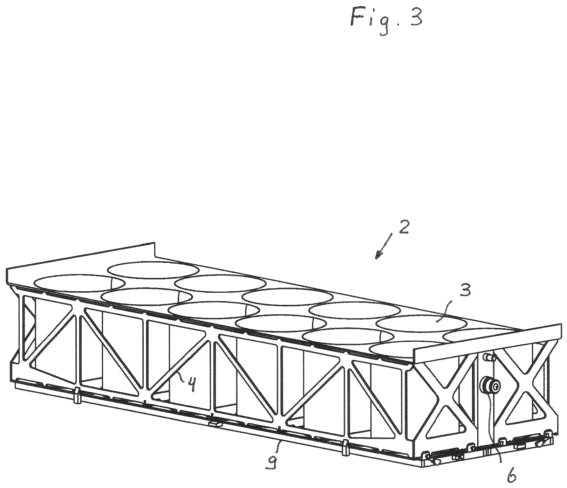

Die Kassette 2 umfasst im Wesentlichen mehrere, im Querschnitt runde (oder eckige) integrierte Käseformen 3 aus perforiertem Edelstahlblech (zum Beispiel Conidur^{™}), und einer umhüllenden Rahmen- und Rippenstruktur 4 (Fig. 3), welche ihr die nötige Stabilität verleiht. An den Schmalseiten der Kassette 2 sind Zapfen 6 für den Eingriff von Greifern eines verfahrbaren Handlinggeräts 5 der Kassettenpresse angebracht.

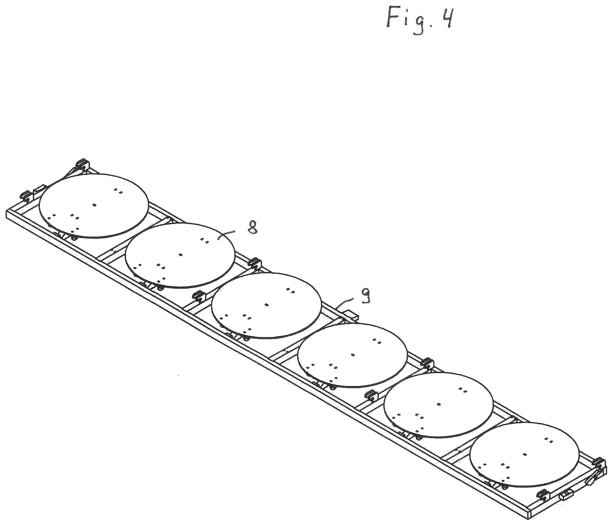

Die Käseformen 3 umfassen ein Mantelblech 7 und einen Boden 8 aus Lochblech sowie oben und unten einen Einlaufbereich. Der Boden 8 liegt im Beispiel im Bereich des unteren Einlaufs am Mantelblech 7 an. Die Böden 8 sind nicht fest mit dem Mantelblech 7 verbunden und zumindest die Böden 8 einer Reihe von Käseformen 3 sind jeweils in einem Bodenrahmen 9 angeordnet (Fig. 4). Jeder Boden 8 ist beweglich im Bodenrahmen 9 angeordnet.

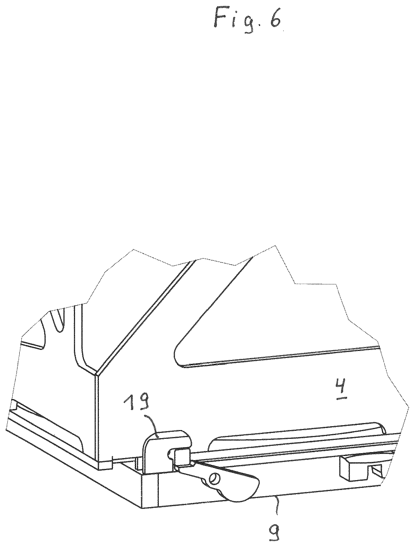

Die Bodenrahmen 9 hängen "lose" an der Rahmen- und Rippenstruktur 4, Presskräfte werden von den Bodenrahmen 9 über Haken 19 in die Rahmen- und Rippenstruktur 4 übertragen (Fig. 6).

Im Beispiel weist die Kassette 2 zwei Reihen Käseformen 3 auf (Fig. 3).

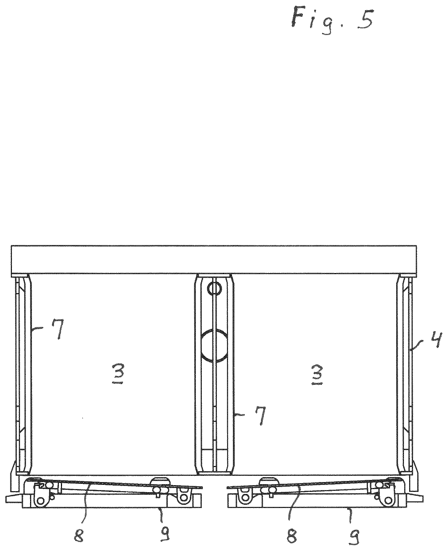

Füße der Kassette 2 sind um einen Formteiler zur Mitte verschoben und in der Rahmen- und Rippenstruktur 4 angebracht (Fig. 5).

Die Ausräumstation umfasst einen Gestellrahmen 10, der im Beispiel mit einem Transportband 11 versehen ist.

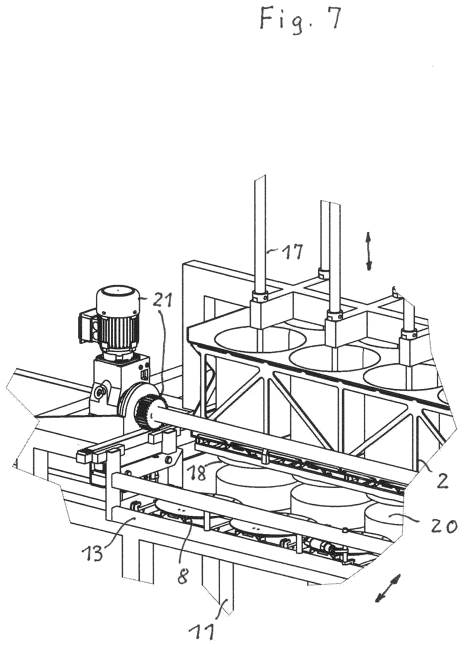

Oberhalb des Transportbandes 11 ist im Gestellrahmen 10 ein zweiteiliger Wagen angeordnet (Fig. 1, 2), dessen zwei Teile, ein vorderer Wagen 13 und ein hinterer Wagen 12, gegeneinander horizontal verschiebbar sind (Fig. 7), so dass der Wagen eine Offenstellung und eine geschlossene Stellung einnehmen kann.

Die Wagen 12, 13 weisen je eine Verriegelungseinrichtung 14 für Bodenrahmen 9 auf.

Höher als die Bauhöhe der Kassette 2 sind in einer Aufnahmevorrichtung 15 pneumatische Ausstosser 16 vertikal bewegbar angeordnet, wobei jeder Käseform 3 ein Ausstosser 16 zugeordnet ist, der zudem in Achsrichtung der Käseform 3 angeordnet ist. Jeder Ausstosser 16 umfasst einen, in einem Lager der Aufnahmevorrichtung 15 geführten Rundstab 17, an dessen, dem Wagen zugewandten Ende ein im Beispiel kreisförmiger Teller 18 befindlich ist, dessen Durchmesser geringfügig kleiner als der Innendurchmesser der Käseform 3 ist.

Die Ausstosser 16 sind im Beispiel so ausgebildet, dass sie die Käselaibe 20 nur partiell angreifen und ein reißverschlussartiges Abreißen bewirken.

Die Wagen 12 und 13, die Verriegelungseinrichtungen 14, die Ausstosser 16 werden mittels, nicht im Detail zu beschreibende, Antriebs- und Steuerelemente 21, die auf dem Gestellrahmen 15 angebracht sind, bewegt.

Zum Abpressen von Käserohmasse befindet sich eine Kassette 2 in bekannter Weise in der Presswanne 1 der Kassettenpresse, die Käserohmasse wird in den Käseformen 3 zur Entfernung von Molke abgepresst. Die Böden 8 und Bodenrahmen 9 sind beim Abpressen mit dem Mantelblech 7 resp. der Rahmen- und Rippenstruktur 4 gekoppelt. So kann der Pressdruck in die Presswanne 1 eingeleitet werden.

Die so entstehenden weichen Käselaibe 20 liegen auf den Böden 8 der Käseformen 3, seitlich umhüllt vom Mantelblech 7.

Für eine Entnahme der Kassette 2 erfassen Greifer des Handlinggeräts 5 die Zapfen 6.

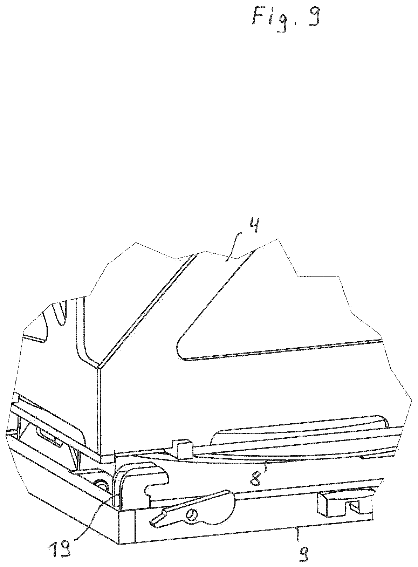

Das Handlinggerät 5 hebt nun die Kassette 2 aus der Presswanne 1 und verfährt sie zum Wagen der Ausräumstation. Dort wird sie zwischen vorderem und hinterem Wagen 12, 13 positioniert, die Teller 18 der Ausstosser 16 werden in die Käseformen 3 verfahren und die Böden 8 von den Mantelblechen 7 der Käseform 3 durch entriegeln/ausfahren gelöst (Fig. 5, 9), wofür das Handlinggerät 5 die entsprechenden Bewegungen in vertikaler Richtung ausübt und dabei die Rahmenstruktur 4 mit den Mantelblechen 7 anhebt. Die Bodenrahmen 9 sind im Beispiel mittels Nut und Bohrung in den Wagen 12, 13 zentriert. Die Käselaibe 20 werden mit den Tellern 18 mittels der Ausstosser 16 sanft aus den Käseformen 3 gedrückt/gestoßen und auf dem Transportband 11 abgelegt.

Die Wagen 12, 13 werden dabei entriegelt und fahren mit den aus der Kassette 2 ausgehängten und abgesenkten Böden 8 und Bodenrahmen 9 (Fig. 9) horizontal gegen außen voneinander weg. Nach der Trennung der Bodenrahmen 9 von der Rahmen- und Rippenstruktur 4 können die Wagen 12, 13 symmetrisch nach aussen fahren, im Beispiel mittels angetriebener Zahnstangen (21, Fig. 7). Die Käselaibe 20 liegen nun direkt auf dem Transportband 11 auf und werden aus der Ausräumstation herausbewegt. Die Bodenrahmen 9 sind dabei im Beispiel mittels Drehriegeln und Pneumatikzylindern mit den Wagen 12, 13 verbunden.

Die Böden 8 senken sich beim wegschieben des Bodenrahmens 9 einseitig und bewirken so einen Reißverschlusseffekt.

Anschließend fahren die Wagen 12, 13 schrittweise aufeinander zu, die Rahmenstruktur 4 wird mit dem Handlinggerät 5 abgesenkt und dabei über die Haken 19 mit dem Bodenrahmen 9 verbunden.

Abschließend hebt das Handlinggerät 5 die Kassette 2 an und verfährt sie in die Presswanne 1 für einen weiteren Abpressvorgang.

### Liste der Bezugszeichen

- 1: Presswanne
- 2: Kassette
- 3: Käseform
- 4: Rahmen- und Rippenstruktur
- 5: Handlinggerät
- 6: Zapfen
- 7: Mantelblech
- 8: Boden
- 9: Bodenrahmen
- 10: Gestellrahmen
- 11: Transportband
- 12: hinterer Wagen
- 13: vorderer Wagen
- 14: Verriegelungseinrichtung
- 15: Aufnahmevorrichtung
- 16: Ausstosser
- 17: Rundstab
- 18: Teller
- 19: Haken
- 20: Käselaib
- 21: Antriebs- und Steuerelemente

## Patentansprüche

1. Verfahren zum Ausräumen eines Käselaibes aus einer Käseform, nach einem Abpressen von Molke, mittels einer Ausräumbewegung entlang der Achse einer Käseform (3), **dadurch gekennzeichnet, dass** beim Ausräumen ein Boden (8) der Käseform (3) von dieser gelöst wird und der Käselaib (20) nachfolgend mit einem Teller (18) eines Ausstossers (16) aus der Käseform (3) gedrückt und auf einer verfahrbaren Ablage abgelegt wird, wobei gleichzeitig der Boden (8) unter dem Käselaib (20) weggezogen wird.

2. Verfahren nach Anspruch 1, **dadurch gekennzeichnet, dass** der Käselaib (20) nach dem wegziehen des Bodens (8) aus der Käseform (3) wegbewegt wird.

3. Verfahren nach Anspruch 1 oder 2, **dadurch gekennzeichnet, dass** der Boden (8) einseitig gesenkt wird.

4. Ausräumstation zur Ausräumung eines Käselaibs aus einer Käseform (3), **dadurch gekennzeichnet, dass** die Ausräumstation einen Gestellrahmen (10) mit einem zweiteiliger Wagen umfasst, der einen vorderen Wagen (13) und einen hinteren Wagen (12) aufweist, wobei die Wagen (12, 13) gegeneinander horizontal verschiebbar angeordnet sind, und dass oberhalb des zweiteiligen Wagens mindestens ein bewegbarer Ausstosser (16) in einer Aufnahmevorrichtung (15) in Achsrichtung der Käseform (3) angeordnet ist.

5. Ausräumstation nach Anspruch 4, **dadurch gekennzeichnet, dass** unterhalb des Wagens ein Ablage- und Transportmittel für Käselaibe (20), bevorzugt ein Transportband (11) angeordnet ist.
